# EUROPÄISCHE PATENTANMELDUNG

(11) **EP 3 985 847 A1**
(43) Veröffentlichungstag der Anmeldung: **20.04.2022**
(21) Anmeldenummer: 20202588.8
(22) Anmeldetag: 19.10.2020
(51) Int. Cl.: H02K 21/16, H02K 1/02

(54) **ANTRIEB FÜR EINE ROBOTERACHSE**

(71) Anmelder: Siemens Aktiengesellschaft, 80333 München (DE)
(72) Erfinder: Vollmer, Rolf, 36129 Gersfeld (DE)

(57) **Zusammenfassung**

Die Erfindung betriff einen Antrieb (22) für eine Roboterachse (5), aufweisend: eine dynamoelektrische Maschine (21) mit einer Polzahl 2p ≥ 14, wobei die dynamoelektrische Maschine (21) einen Stator (10) aufweist, wobei der Stator (10) eine Mehrzahl an Materiallagen (25) aufweist, wobei die Materiallagen (25) einen derartigen Eisengehalt aufweisen, dass eine Hystereseziffer von < 1 W/kg erreichbar ist, wobei eine Materiallage (25) derart dünn ausgeführt ist, dass eine Wirbelstromziffer von < 0,4 W/kg erreichbar ist, wobei die Materiallagen (25) derart ausgebildet sind, dass eine Polarisierbarkeit B25 der Materiallagen > 1,6 T ist; ein Getriebe (24), wobei das Getriebe (24) einstufig ausgebildet ist. Die Erfindung betrifft ferner einen Roboter (1), insbesondere kollaborativer Roboter, aufweisend einen derartigen Antrieb (22).

## Beschreibung

Die Erfindung betrifft einen Antrieb für eine Roboterachse.

Antriebe für Roboter, insbesondere kollaborierende Roboter, umfassen meist einen Elektromotor mit Bremse und ein Getriebe. Bisher werden vorwiegend Servomotoren in Kombination mit mehrstufigen Zahnradgetrieben oder mit Strain Wave Gears verwendet. Durch einen derartigen Antrieb entstehende Geräuschemissionen können jedoch störend wirken.

Roboter, besonders jene, die mit Personen auf engem Raum interagieren, sollen leise, leistungsstark und bei mobilen Anwendungen besonders effizient sein.

Der Erfindung liegt die Aufgabe zugrunde, einen Antrieb für einen Roboter dahingehend zu verbessern.

Die Lösung der Aufgabe gelingt durch Anspruch 1, d. h. einen Antrieb für eine Roboterachse, aufweisend:
- eine dynamoelektrische Maschine mit einer Polzahl 2p ≥ 14, wobei die dynamoelektrische Maschine einen Stator aufweist, wobei der Stator eine Mehrzahl an Materiallagen aufweist, wobei die Materiallagen einen derartigen Eisengehalt aufweisen, dass eine Hystereseziffer von < 1 W/kg erreichbar ist, wobei eine Materiallage derart dünn ausgeführt ist, dass eine Wirbelstromziffer von < 0,4 W/kg erreichbar ist, wobei die Materiallagen derart ausgebildet sind, dass eine Polarisierbarkeit B25 der Materiallagen > 1,6 T ist,
- ein Getriebe, wobei das Getriebe einstufig ausgebildet ist.

Die dynamoelektrische Maschine ist vorteilhaft eine dynamoelektrische rotatorische Maschine. Sie ist vorzugsweise als Servomotor ausgebildet.

Besonders gut ist die Erfindung für kollaborative Roboter geeignet. Ein kollaborativer Roboter ist derart gestaltet, dass eine Zusammenarbeit mit Menschen ohne trennende Schutzeinrichtung, vorzugsweise in einem Raum, möglich ist. Der kollaborative Roboter ergänzt die Fähigkeiten des Menschen und es wird eine Automatisierung von zuvor manuell ausgeführten Produktionsschritten ermöglicht. Die Erfindung bietet den Vorteil, dass eine für den Menschen angenehme und sichere Zusammenarbeit mit dem Roboter, insbesondere im Hinblick auf Lärm und andere störende Geräusche, gewährleistet wird.

Die Maschine ist hochpolig ausgebildet, was von Vorteil ist, da dadurch eine hohe Drehmomentdichte erreichbar ist.

Das einstufige Getriebe ist vorteilhaft, da dadurch ein wenigstens im Wesentlichen spielfreies System ermöglicht wird. Dies ist für einen Wechsel von einem Rechtslauf auf einen Linkslauf des Antriebs hilfreich. Dies ist mitunter auch für einen Antrieb wichtig, der in einem Exoskelett eingesetzt ist, da dort ein Wechsel der Laufrichtung sofort umgesetzt werden muss.

Das Getriebe ist z. B. ein Zykloidgetriebe. Das Getriebe kann auch ein Schneckengetriebe sein. Das Getriebe kann auch ein Schraubengetriebe sein. Das Getriebe kann auch ein Kugelgewinde sein. Das Getriebe kann ferner ein schrägverzahntes Zahnradgetriebe sein.

In einer vorteilhaften Ausführung weist das Getriebe ein Übersetzungsverhältnis zwischen 60 und 250 auf.

Vorteilhaft liegt das Übersetzungsverhältnis zwischen 50 und 300, insbesondere zwischen 60 und 160.

Eine derartige Übersetzung ist vorteilhaft, da dadurch Kraft und Drehmoment der Maschine verstärkt werden.

Die dynamoelektrische Maschine weist einen Stator auf, wobei der Stator eine Mehrzahl an Materiallagen aufweist, wobei die Materiallagen einen derartigen Eisengehalt aufweisen, dass eine Hystereseziffer von < 1 W/kg erreichbar ist.

Eine derartige Hystereseziffer ist durch nur einen geringen oder gar keinen Legierungsgehalt der Materiallage erreichbar.

Besonders bevorzugt weist die Materiallage Reineisen auf. Aus technischen Gründen ist jedoch ein geringer Legierungsgehalt wahrscheinlich. Vorteilhaft machen Legierungsbestandteile jedoch weniger als 1% des Materials aus.

Die Materiallage ist z. B. mittels des in EP 3595148 A1 beschriebenen Verfahrens herstellbar. Die Herstellung einer Materiallage mit einer Lagendicke zwischen 0,5 und 500 µm gelingt durch folgende Schritte: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Der Legierungsbestandteil ist z. B. Phosphat. Dies ist beispielsweise ein Hilfsmittel für die Sinterung.

Eine Materiallage ist derart dünn ausgeführt, dass eine Wirbelstromziffer von < 0,4 W/kg erreichbar ist. Derart dünne Materiallagen sind mittels des beschriebenen Verfahrens herstellbar.

Eine Materiallage ist vorteilhaft dünner als 150 µm.

Die Hystereseziffer und die Wirbelstromziffer werden vorteilhaft bei einer Flussdichte von 1 T und einer Frequenz von 50 Hz gemessen.

Die Materiallagen erfüllen die Aufgaben und Funktionen eines Blechs. Die Materiallagen können Bleche sein. Durch die verlustarmen Materiallagen hat die Maschine einen hohen Wirkungsgrad und eine hohe Leistungsdichte.

Die Materiallagen sind derart ausgebildet, dass eine Polarisierbarkeit B25 der Materiallagen > 1,6 T ist.

Die Polarisierbarkeit B25 beschreibt hierbei eine Flussdichte bei 25 A/cm.

Dies gelingt durch einen nur geringen Legierungsgehalt.

Die hohe Polarisierbarkeit wirkt sich positiv auf eine Drehmomentdichte aus.

In einer vorteilhaften Ausführungsform weist der Stator eine Mehrzahl an Zähnen auf, wobei der Stator zwischen zwei Zähnen eine Nut aufweist, wobei der Stator eine Mehrzahl an Zähnen erster Art aufweist, wobei der Stator eine Mehrzahl an Zähnen zweiter Art aufweist.

Vorteilhaft unterscheiden sich die Zähne erster Art und die Zähne zweiter Art hinsichtlich einer Zahnbreite.

Dies ist von Vorteil, da sich durch zwei verschiedene Zahnbreiten ein Wickelfaktor verbessert. Beispielsweise weisen typische q = 1/2-Wicklungen von Servomotoren einen Wickelfaktor von 0,866 auf.

Eine Wicklung kann durch den in dieser Ausführungsform erläuterten Blechschnitt den Wickelfaktor nahe 1, insbesondere 0,95 < Wickelfaktor < 1, aufweisen.

In einer vorteilhaften Ausführungsform weist der Stator eine Zahnspulenwicklung auf.

In einer vorteilhaften Ausführungsform ist in einer Nut genau eine Spulenseite einer Phase der Zahnspulenwicklung angeordnet.

In einer vorteilhaften Ausführungsform weist der Stator eine Bruchlockwicklung mit einer Lochzahl q < 1 auf.

In einer vorteilhaften Ausführungsform ist das Getriebe derart ausgebildet, dass eine Geräuschemission <60 dB ist.

Dies wird z.B. dadurch erreicht, dass ein Getriebe mit geräuscharmen Zähnen eingesetzt wird (in anderen Worten: Zähne, die nicht oder nur kaum klappern) und kaum bzw. keine Kavitation im Öl entsteht. Diese hauptsächlichen Schallerzeugungsmechanismen im Getriebe werden vermieden bzw. reduziert.

Die genannten Getriebe arbeiten z. B. zum Teil ohne Verzahnung und drehen relativ langsam bei gleicher Übersetzung. Beispielsweise kommt ein Schneckengetriebe mit einer Übersetzungsstufe auf sehr hohe Übersetzungen, wo Zahnradgetriebe zwei oder gar drei Stufen benötigen.

In einer vorteilhaften Ausführungsform gilt für eine Nutteilung τ_{N} eines Zahns, insbesondere umwickelten Zahns, und eine Polteilung τ_{P}: 0,8 · τ_{N} ≤ τ_{P} ≤ 1,2 · τ_{N}

Die Polteilung ist durch eine Anzahl an Polen gegeben. Die Nutteilung des umwickelten Zahns ist abhängig von der Polteilung. Daher gilt vorteilhaft: 0,8 · τ_{P} ≤ τ_{N} ≤ 1,2 · τ_{P}

In einer vorteilhaften Ausführungsform weist die dynamoelektrische Maschine einen Rotor auf, wobei der Rotor Permanentmagnete aufweist, wobei die Permanentmagnete eine Remanenz Br > 1,2 T aufweisen.

Dies ist z. B. unter Einsatz moderner Hochenergiemagnete erreichbar.

Die dynamoelektrische Maschine ist vorzugsweise eine permanenterregte Synchronmaschine. Es ist jedoch auch denkbar, dass die dynamoelektrische Maschine eine Hybriderregung aufweist. Dies gelingt durch eine permanenterregte Synchronmaschine mit einem zusätzlichen Reluktanzmoment.

In einer vorteilhaften Ausführungsform gilt für eine Magnetteilung τ_{M} der Permanentmagnete gilt: τ_{M} ≥ 0,8 · τ_{P}, vorzugsweise τ_{M} ≥ 0,9 · τ_{P}.

In einer vorteilhaften Ausführungsform weist der Antrieb einen Umrichter auf, wobei eine Drehmomentwelligkeit der dynamoelektrischen rotatorischen Maschine regelungstechnisch reduzierbar oder kompensierbar ist.

Der Umrichter umfasst hierzu vorteilhaft eine Funktion zur regelungstechnischen Drehmomentwelligkeitsreduktion und/ oder zur regelungstechnischen Drehmomentwelligkeitskompensation.

In einer vorteilhaften Ausführungsform ist mittels eines Kompensationsstroms wenigstens eine harmonische Schwingung der Drehmomentwelligkeit reduzierbar oder kompensierbar.

Um die Drehmomentwelligkeit auf ein gewünschtes Maß zu reduzieren bzw. zu kompensieren, werden vorteilhaft durch eine Strom-Vorsteuerung zu den einzelnen Harmonischen in der Drehmomentwelligkeit passende Kompensationsströme, insbesondere bezüglich einer Amplitude und/oder Phase, erzeugt und eingespeist.

Die Lösung der oben gestellten Aufgabe gelingt ferner durch einen Roboter, aufweisend einen derartigen Antrieb.

Der beschriebene Antrieb ist kompakt und leise und hat eine hohe Energieeffizienz. Der Antrieb eignet sich daher besonders gut für einen kollaborierenden Roboter.

Die Erfindung ist von Vorteil, da ein Gesamtwirkungsgrad des Antriebs im Nennpunkt größer als 89% ist bei einem Getriebewirkungsgrad von größer 95%.

Im Folgenden wird die Erfindung anhand der in den Figuren dargestellten Ausführungsbeispiele näher beschrieben und erläutert. Es zeigen
- FIG 1: einen Stator einer dynamoelektrischen rotatorischen Maschine,
- FIG 2: eine Wicklung die in den Nuten des Stators angeordnet ist,
- FIG 3: einen Rotor der dynamoelektrischen rotatorischen Maschine,
- FIG 4: die dynamoelektrische rotatorische Maschine mit dem Stator und dem Rotor,
- FIG 5: einen Antrieb, aufweisend die dynamoelektrische rotatorische Maschine sowie einen Umrichter,
- FIG 6: einen Roboter, insbesondere kollaborativen Roboter.

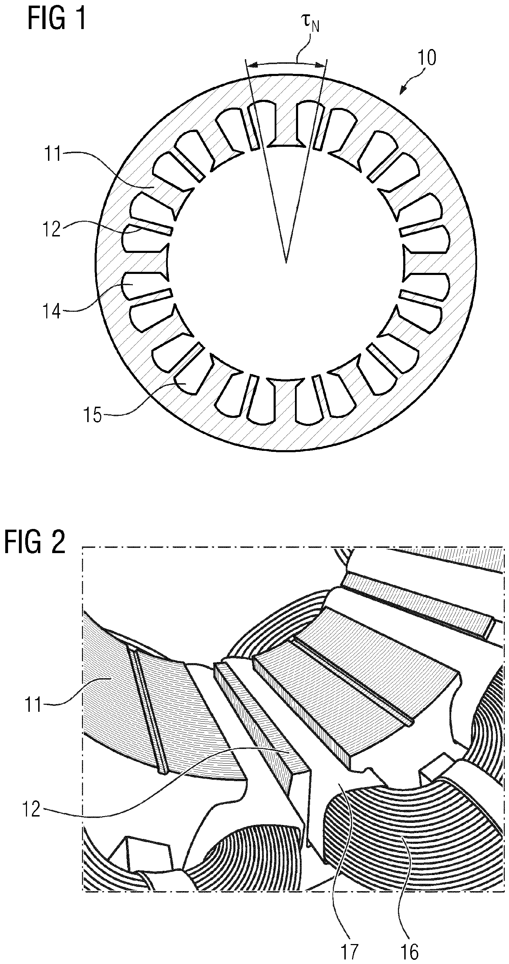

FIG 1 zeigt einen Stator 10 einer dynamoelektrischen rotatorischen Maschine.

Der Stator 10 umfasst vorzugsweise eine Mehrzahl an hintereinander angeordneten Materiallagen (25, siehe FIG 2). Die Figur zeigt, dass der Stator 10 eine Mehrzahl an Zähnen erster Art 11 und eine Mehrzahl an Zähnen zweiter Art 12 aufweist.

Ferner ist zwischen Zahn 11 und Zahn 12 eine Nut 14 sowie zwischen Zahn 12 und Zahn 11 eine Nut 15 angeordnet. Die Zähne erster Art unterscheidet sich von den Zähnen zweiter Art hinsichtlich ihrer Kontur. Vorteilhaft sind die Zähne 11, 12 radial betrachtet in einer periodischen Abfolge angeordnet.

FIG 2 zeigt eine Wicklung 16 die in den Nuten 14, 15 des Stators 10 angeordnet ist.

Die Wicklung 16 ist vorteilhaft eine Zahnspulenwicklung, wobei in einer Nut genau eine Spulenseite einer Phase angeordnet ist. Die Wicklung 16 ist vorzugsweise als Bruchlochwicklung mit einer Lochzahl q>1 ausgebildet.

Die Wicklung 16 umfasst ferner eine Isolation an den Bereichen an den eine Berührung mit dem Stator, insbesondere in den Nuten 14, 15 gegeben ist.

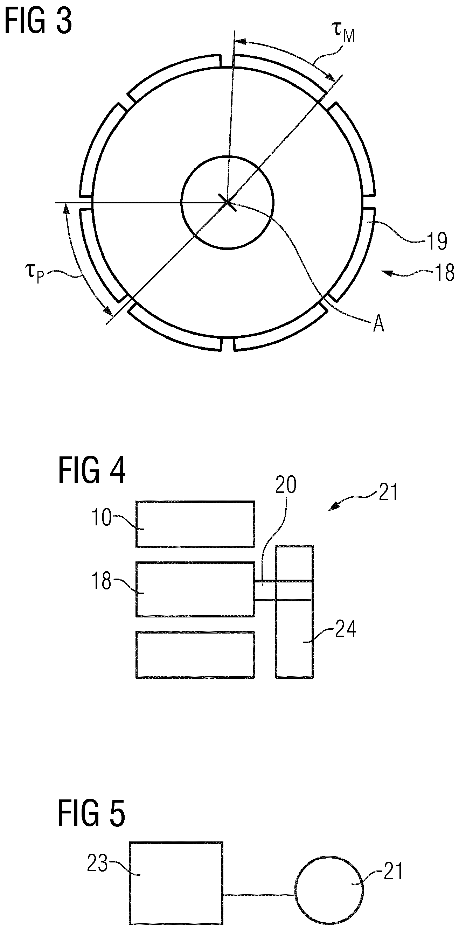

FIG 3 zeigt einen Rotor 18 der dynamoelektrischen rotatorischen Maschine 21.

Die Figur zeigt eine Rotationsachse A sowie am Außenumfang des Rotors angeordnete Permanentmagnete 19. Die Permanentmagnete 19 weisen vorteilhaft Neodym-Eisen-Bor (NdFeB) auf, mit einer Remanenzinduktion Br > 1,2 T.

FIG 4 zeigt die dynamoelektrische rotatorische Maschine 21 mit dem Stator 10 und dem Rotor 18.

Die Maschine 21 weist zudem eine Welle 20 auf, welche mit einem Getriebe 24 gekoppelt ist.

FIG 5 zeigt einen Antrieb 22, aufweisend die dynamoelektrische rotatorische Maschine 21 sowie einen Umrichter 23.

Vorteilhaft weist der Umrichter eine Funktion auf, mit welcher eine Drehmomentwelligkeit der dynamoelektrischen rotatorischen Maschine 21 regelungstechnisch reduzierbar bzw. kompensierbar ist. Dies gelingt vorteilhaft mittels eines Kompensationsstroms, der zur Reduktion bzw. Kompensation wenigstens einer harmonischen Schwingung der Drehmomentwelligkeit ausgebildet ist.

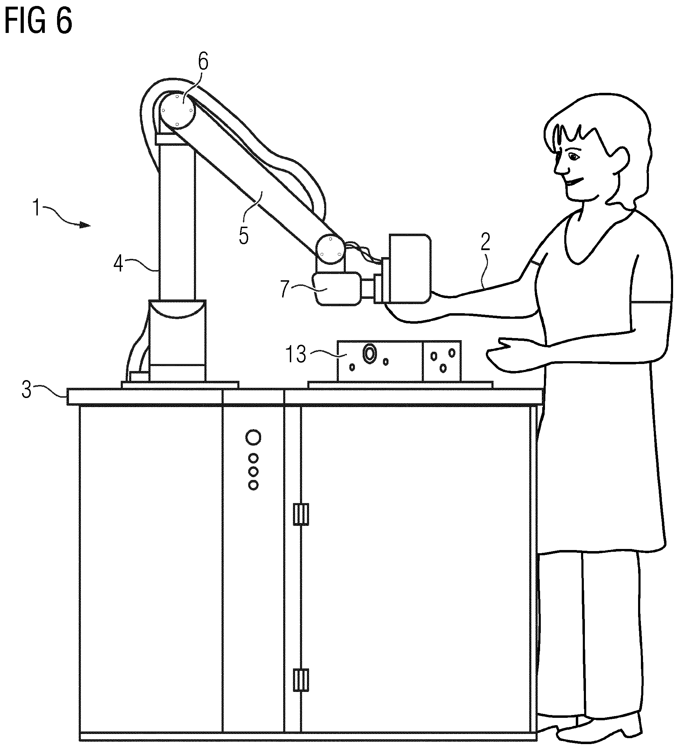

FIG 6 zeigt einen Roboter, insbesondere kollaborativen Roboter 1.

Der Roboter 1 weist einen Oberarm 4 sowie einen Unterarm 5 auf. Die beiden Arme 4, 5 sind mittels eines Gelenks 6 miteinander gekoppelt. Der beschriebene Antrieb befindet sich beispielsweise im Gelenk 6 und dient einer Bewegung des Unterarms 5.

Der Roboter 1 weist zudem ein Werkzeug 7 auf und ist zur Kollaboration mit einer Person 2 ausgebildet. Mit Hilfe des Roboters 1 kann ein Werkstück 13, welches auf einem Arbeitstisch 3 positioniert ist, bearbeitet werden.

Die Erfindung bietet den Vorteil, dass eine hohe Drehmomentdichte, insbesondere durch hohen Wickelfaktor, erreichbar ist. Ferner tragen eine hohe Luftspaltinduktion und eine hohe Polzahl dazu bei.

Keine oder nur eine geringe Schrägung wirkt sich zudem positiv aus.

Die Erfindung bietet den Vorteil, dass eine hohe Leistungsdichte, insbesondere durch verlustarme Bleche, vorliegt.

Eine geringe Geräuschentwicklung, z. B. durch isotrope Bleche mit geringer Magnetostriktion und/oder durch leise Getriebe, sind zudem vorteilhaft.

## Patentansprüche

1. Antrieb (22) für eine Roboterachse (5), aufweisend:
- eine dynamoelektrische Maschine (21) mit einer Polzahl 2p ≥ 14, wobei die dynamoelektrische Maschine (21) einen Stator (10) aufweist, wobei der Stator (10) eine Mehrzahl an Materiallagen (25) aufweist, wobei die Materiallagen (25) einen derartigen Eisengehalt aufweisen, dass eine Hystereseziffer von < 1 W/kg erreichbar ist, wobei eine Materiallage (25) derart dünn ausgeführt ist, dass eine Wirbelstromziffer von < 0,4 W/kg erreichbar ist, wobei die Materiallagen (25) derart ausgebildet sind, dass eine Polarisierbarkeit B25 der Materiallagen > 1,6 T ist,
- ein Getriebe (24), wobei das Getriebe (24) einstufig ausgebildet ist.

2. Antrieb (22) nach Anspruch 1, wobei der Stator (10) eine Mehrzahl an Zähnen (11, 12) aufweist, wobei der Stator (10) zwischen zwei Zähnen (11, 12) eine Nut (14, 15) aufweist, wobei der Stator (10) eine Mehrzahl an Zähnen erster Art (11) aufweist, wobei der Stator eine Mehrzahl an Zähnen zweiter Art (12) aufweist.

3. Antrieb (22) nach einem der vorhergehenden Ansprüche, wobei der Stator (10) eine Zahnspulenwicklung (16) aufweist.

4. Antrieb (22) nach Anspruch 4, wobei in einer Nut (14, 15) genau eine Spulenseite einer Phase der Zahnspulenwicklung (16) angeordnet ist.

5. Antrieb (22) nach einem der vorhergehenden Ansprüche, wobei der Stator (10) eine Bruchlockwicklung (16) mit einer Lochzahl q < 1 aufweist.

6. Antrieb (22) nach einem der vorhergehenden Ansprüche, wobei das Getriebe (24) derart ausgebildet ist, dass eine Geräuschemission <60 dB ist.

7. Antrieb (22) nach einem der Ansprüche 2 bis 6, wobei für eine Nutteilung τ_{N} eines Zahns (11, 12), insbesondere umwickelten Zahns, und eine Polteilung τ_{P} gilt: 0,8 · τ_{N} ≤ τ_{P} ≤ 1,2 · τ_{N}.

8. Antrieb (22) nach einem der vorhergehenden Ansprüche, wobei die dynamoelektrische Maschine (21) einen Rotor (18) aufweist, wobei der Rotor (18) Permanentmagnete (19) aufweist, wobei die Permanentmagnete (19) eine Remanenz Br > 1,2 T aufweisen.

9. Antrieb (22) nach Anspruch 8, wobei für eine Magnetteilung τ_{M} der Permanentmagnete (19) gilt: τ_{M} ≥ 0,8 · τ_{P}, vorzugsweise τ_{M} ≥ 0,9 · τ_{P}.

10. Antrieb (22) nach einem der vorhergehenden Ansprüche, aufweisend einen Umrichter (23), wobei eine Drehmomentwelligkeit der dynamoelektrischen rotatorischen Maschine (21) regelungstechnisch reduzierbar oder kompensierbar ist.

11. Antrieb (22) nach einem der vorhergehenden Ansprüche, wobei mittels eines Kompensationsstroms wenigstens eine harmonische Schwingung der Drehmomentwelligkeit reduzierbar ist oder kompensierbar ist.

12. Roboter (1), insbesondere kollaborativer Roboter, aufweisend einen Antrieb (22) nach einem der vorhergehenden Ansprüche.
